(19) Europäisches Patentamt
European Patent Office
Office européen des brevets

(11) **EP 3 954 206 A1**

(12) **EUROPEAN PATENT APPLICATION**

(43) Date of publication:
**16.02.2022 Bulletin 2022/07**

(21) Application number: **20190637.7**

(22) Date of filing: **12.08.2020**

(51) International Patent Classification (IPC):
***A01K 61/95*** (2017.01)

(52) Cooperative Patent Classification (CPC):
**A01K 61/95**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Furuno Electric Company Limited Hyogo 662-8580 (JP)**

(72) Inventors:
• **IKEGAMI, Atsushi**
  **Nishinomiya-city, Hyogo 662-8580 (JP)**
• **NAKAMURA, Satoshi**
  **Nishinomiya-city, Hyogo 662-8580 (JP)**

(74) Representative: **CSY London**
  **10 Fetter Lane**
  **London EC4A 1BR (GB)**

(54) **FISH SIZE CALCULATION WITH COMPENSATION OF THE TAIL BEAT**

(57) The disclosure relates to a fish size calculating device, including a camera system (105), a fish detection module (110), a body part detection module (120), a tracking module (130) and a size calculation module (160). The camera system takes a plurality of pictures in time. The fish detection module detects a fish on the plurality of pictures. The body part detection module detects a body part of the detected fish on the plurality of pictures. The tracking module tracks an identical fish among the detected fish on the plurality of pictures. The size calculation module calculates a size of the tracked identical fish.

**FIG. 1**

# Description

## TECHNICAL FIELD

The present subject matter described herein, relates to the technical field of calculating fish size. The present subject matter, particularly, relates to a device for calculating fish length using a stereo camera capturing a plurality of pictures and then selecting a picture for size calculation.

## BACKGROUND OF THE INVENTION

Background description includes information that may be useful in understanding the present invention. It is not an admission that any of the information provided herein is prior art or relevant to the presently claimed invention, or that any publication specifically or implicitly referenced is prior art.

The aquaculture industry relates to the production of aquatic organisms, including fish, molluscs, crustaceans, and aquatic plants, and the cultivation of freshwater and marine plants and animals under controlled conditions for all or parts of their life cycles. In order to run a successful aquaculture operation, it is required to check the high feeding cost, labour intensive work, imprecise data on number of fish, growth or size of fish.

It is therefore required that owing to development in technology, there must be advancements which enable the measurement of fish size without practically touching the fish.

The purpose of fish measurement will assist in regulating the growth of the fish in cages. The fish measurement is preferentially carried out by measuring the biomass of the fish. The established technique to calculate biomass is using fish count and fish weight.

Now fish weight being the crucial factor, it depends on accuracy of "fork length" (i.e., fish length) and "body depth" (i.e., fish height). It is an established principle that 5% or less error is required for calculating the fish weight.

$$Weight = \alpha \times (Fork\ Length)^3$$

It is apparent that, there should not be more than 2% of error while calculating "fork length". Therefore, the project invention aims to provide a device capable of providing "fork length" with 2% or less error.

In the conventional methods, fish length is conventionally measured using a stereo camera system.

A conventional technique consists of:

- measuring the fork length of several fish and deriving a mean value;

- considering the derived mean value as a true value of fork length;

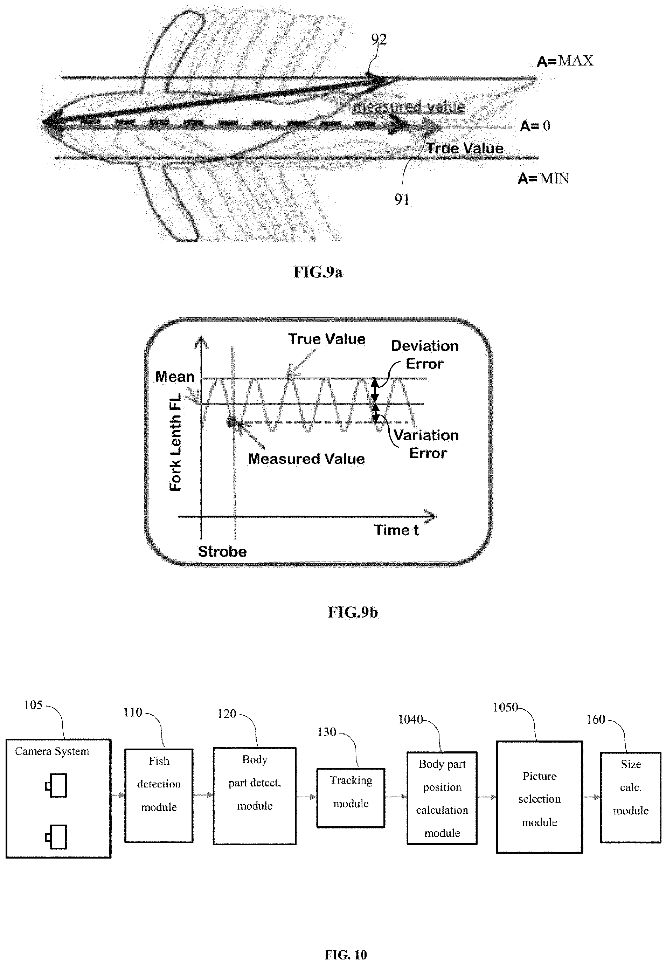

However, there are few problems in the conventional techniques available in prior art. Referring to Fig. 9a (prior-art), the fork length measurement error is generally over 2% because the average of fork length measurement does not provide true value thus, the measured fork length (92) is always smaller than or equal to the true-value (91). Also, because of the tail-beat motion, fork length measurement error is higher than 2%.

The error of the conventional techniques is as:

$$Error = variation\ error + deviation\ error$$

Referring to Fig. 9b (prior art), the conventional methods provide solution for variation error by calculating the mean value of fork length measurements but fail to provide solution for the deviation error. Due to this shortcoming, the true value of fork length is not accurately calculated.

The problem, for providing accurate fork length for a single fish, is addressed by the present invention.

In prior art, the conventional techniques involve oversampling by capturing pictures at a frame rate such that: *Frame rate > Tail beat frequency \*2.*

In the known techniques, the oversampling process generates a heavy process load on the system.

This problem is addressed by the present invention, by providing process to record single fish in either under sampling or oversampling and a technique to change the operational mode of the frame rate upon fish detection.

The present invention addresses the problems by using a stereo camera for taking, in series, a plurality of pictures at specific time intervals. The present invention proposes techniques to extract the instance at which the fish is not bending. This is achieved by measuring camera-tail distance on each frame and extracting a frame in which the camera-tail distance is at an intermediate distance, between a max value of the distances and a min value of the distances.

The present invention provides calculation of frame rate for the operational mode of the frame rate when fish is detected from tail beat frequency estimation. Such an approach reduces the load on the system.

## SUMMARY OF THE INVENTION

Solution to one or more drawbacks of existing invention, and additional advantages are provided in the present disclosure. Additional features and advantages are realized through the technicalities of the present disclosure. Other embodiments and aspects of the disclosure are described in detail herein and are considered to be a part of the claimed disclosure.

The present invention relates to a fish size calculating device, that includes a camera system, a fish detection module, a body part detection module, a tracking module and a size calculation module. The camera system is configured to take a plurality of pictures in time. The fish detection module is configured to detect a fish on the plurality of pictures and the body part detection module is configured to detect a body part of the detected fish on the plurality of pictures. Further, the tracking module is configured to track an identical fish among the detected fish on the plurality of pictures. Thereafter, the size calculation module is configured to calculate a size of the tracked identical fish.

In an aspect of the invention, a distance calculation module is configured to calculate a camera-body part distance between the camera system and the body part of the tracked identical fish on the plurality of pictures. A picture selection module is configured to select a picture of the tracked identical fish from among the plurality of pictures on which the identical fish has been tracked based on the camera-body part distances of the tracked identical fish. The size calculation module is configured to calculate the size of the tracked identical fish from the selected picture.

In an aspect of the invention, the picture selection module is configured to search for an intermediate picture, from among the plurality of pictures on which the identical fish has been tracked, on which the camera-body part distance is at an intermediate distance, the intermediate distance being smaller than on another picture where the camera-body part distance is a maximum, and the intermediate distance being bigger than on another picture where the camera-body part distance is a minimum, and set the intermediate picture as the selected picture.

Preferably, when the picture selection module has found a plurality of intermediate pictures, the picture selection module is configured to select a picture, from among the plurality of intermediate pictures, in which the camera-body part distance is at a median distance, as the selected picture.

Preferably, when the picture selection module has found a plurality of intermediate pictures, the picture selection module is configured to select a picture, from among the plurality of intermediate pictures, in which the camera-body part distance is nearest to mean of distances, as the selected picture.

Preferably, when the picture selection module has found a plurality of intermediate pictures, the picture selection module is configured to select a picture, from among the plurality of intermediate pictures, whose time is nearest to mean of times, as the selected picture.

In an aspect of the invention, the body part detection module is configured to detect, as the body part, a part closer to a tail of the fish than a mouth of the fish.

In another aspect of the invention, the body part detection module is configured to detect, as the body part, a part on a tail of the fish.

In one aspect of the present invention, a strobe speed control module is configured to control a time lag between the plurality of pictures taken by the camera system, the time lag being reduced when the fish detection module detects fish and increased when the fish detection module does not detect fish.

Preferably, when the fish detection module (110) detects fish, the strobe speed control module is configured to calculate a frequency component from the camera-body part distances, and control the time lag based on the frequency component.

In yet another aspect of the invention, the strobe speed control module is configured to control the time lag so that a sampling frequency corresponding to the time lag is a least set to twice the frequency component.

In one aspect of the present invention, a body part position calculation module is configured to calculate a position of the body part of the tracked identical fish on the plurality of pictures and calculate a line that best fits the positions of the body part of the tracked identical fish. A picture selection module is configured to select a picture of the tracked identical fish from among the plurality of pictures on which the identical fish has been tracked, based on a relative position of the body part and the line. The size calculation module is configured to calculate the size of the tracked identical fish from the selected picture.

In an aspect of the invention, the picture selection module is configured to select a picture of the tracked identical fish from among the plurality of pictures on which the position of the body part is less than a given distance from the line.

In an aspect of the invention, the picture selection module is configured to select a picture of the tracked identical fish from among the plurality of pictures on which the position of the body part is closest to the line.

In an aspect of the invention, the body part detection module is configured to detect, as the body part, a part closer to a tail of the fish than a mouth of the fish.

In an aspect of the invention, the body part detection module is configured to detect, as the body part, a part on a tail of the fish.

In an aspect of the invention, a strobe speed control module is configured to control a time lag between the plurality of pictures taken by the camera system, the time lag being reduced when the fish detection module detects fish and increased when the fish detection module does not detect fish.

According to another aspect of the present invention relates to a method which includes capturing a plurality of pictures in time, detecting a fish on the plurality of pictures and then detecting a body part of the detected fish on the plurality of pictures. Further the method includes tracking an identical fish among the detected fish on the plurality of pictures. Thereafter, the method includes calculating a size of the tracked identical fish.

The foregoing summary is illustrative only and is not intended to be in any way limiting. In addition to the illustrative aspects, embodiments, and features described above, further aspects, embodiments, and features will become apparent by reference to the drawings and the following detailed description.

## EFFECT OF THE INVENTION

The present invention provides a device which correctly calculates fish size using stereo camera system, by taking a plurality of pictures, selecting one of the pictures on which the fish is not bending, and calculating fish size from the selected picture.

## BRIEF DESCRIPTION OF THE DRAWINGS

It is to be noted, however, that the appended drawings illustrate only typical embodiments of the present subject matter and are therefore not to be considered for limiting of its scope. The detailed description is described with reference to the accompanying figures. In the figures, a reference number identifies the figure in which the reference number first appears. The same numbers are used throughout the figures to reference like features and components. Some embodiments of system or methods or structure in accordance with embodiments of the present subject matter are now described, by way of example, and with reference to the accompanying figures, in which:

Fig. 1 is a flowchart illustrating the structural features of the invention;

Fig. 2 is a flowchart illustrating one example of a procedure to calculate camera-tail distance;

Fig. 3 is illustrating a graphical representation of camera-tail distance measurements over time;

Fig. 4 is illustrating a graphical representation of fork length calculation of the adopted strobe as output;

Fig. 5 is a flowchart illustrating one example of a procedure to measure fork length;

Fig. 6 is illustrating a graphical representation of frame extraction with relation to camera-tail distance;

Fig. 7 is illustrating a graphical representation of frame rate control in two different states;

Fig. 8 is a flowchart illustrating one example of controlling frame rate;

Fig. 9 is illustrating the problems with the conventional prior art techniques;

Fig. 10 is a flowchart illustrating the structural features of another embodiment of the invention;

Fig. 11 is illustrating an example in which positions of a tail over time are plotted.

The figures depict embodiments of the present subject matter for the purposes of illustration only. A person skilled in the art will easily recognize from the following description that alternative embodiments of the structures and methods illustrated herein may be employed without departing from the principles of the disclosure described herein.

## DETAILED DESCRIPTION OF THE INVENTION

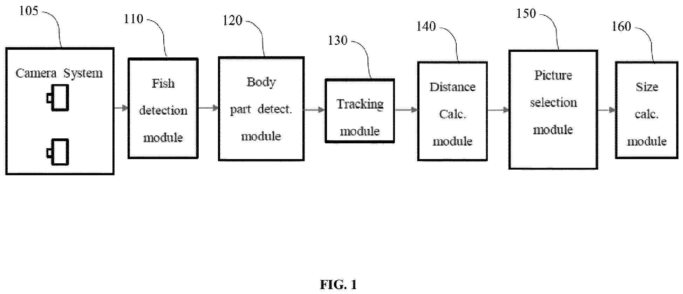

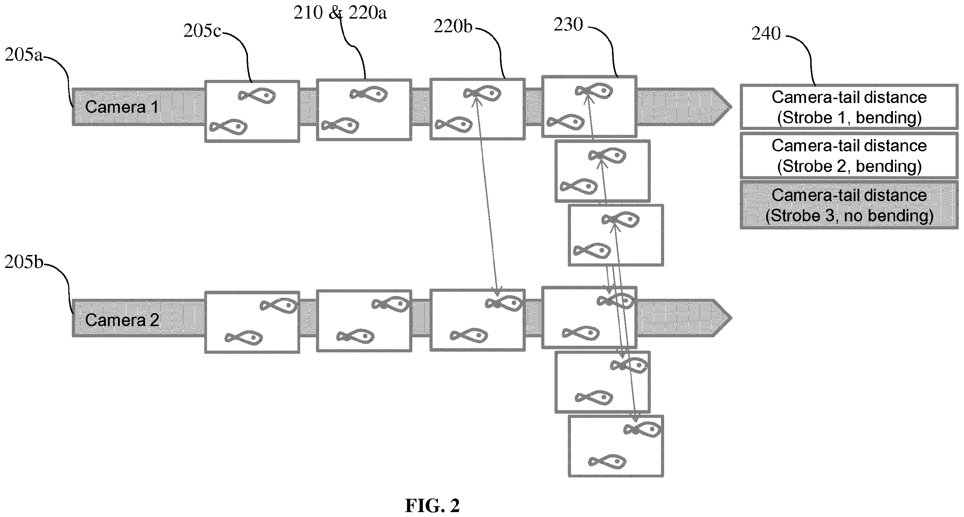

Referring to Figs. 1, 2 and 5; a device for calculating fish size is illustrated. In an embodiment, the device includes a stereo camera (105, 205a & 205b, 505a & 505b), a fish detection module (110, 210, 510), a body part detection module (120, 220a, 520a), a tracking module (130, 230, 530), a distance calculation module (140, 240, 540), a picture selection module (150) and a size calculation module (160, 560).

In an embodiment of the invention, the stereo camera (105, 205a, 205b, 505a, 505b) which may also be referred to as a camera system, is configured to take, in series, a pair of pictures (205c, 505c) using a camera sync strobe module. The camera 1 (205a, 505a) and camera 2 (205b, 505b) constitute the stereo camera facing the fish and is configured to take, in series, the pair of pictures i.e. pair-1 at time ti, pair-2 at time t2.... pair-n at time tn using synchronization conventionally done by, for example, using General Purpose Input/output (GPIO) Synchronization, bus timestamp synchronization, sound signal synchronization or methods alike.

The fish detection module (110, 210, 510) is configured to perform the task of detecting a fish on plurality of pictures (205c, 505c). The fish is detected on each picture and is represented for example, without limitation, by one of following ways:

- A rectangular area surrounding a single fish is shown to indicate the presence of a detected fish.

- Instead of a rectangular area, a filled area is also conventionally used.

The fish detection is conventionally performed by processing circuitry or cameras. It is proposed that conventional point detection methods are used for performing the task of detecting fish such as, machine learning, feature point detection, edge detection techniques.

The body part detection module (120, 220a), which may also be referred to as tail detection module (520a) is, configured to detect a body part such as tail on each fish of the paired fish on the plurality of paired pictures (205c), and determine a 2D position of each body part on the pair of pictures. The body part, preferably tail is indicated by a bold dot at step 220a. In the present invention, without limiting to the flow, body parts close to tail (preferably closer to tail than mouth) of the detected fish on the paired picture can also be considered for the purpose of this invention. There are several conventional point detection methods available that can be used, such as, feature point detection, edge detection, with or without machine learning capabilities.

A pairing module (220b, 520b) is configured to pair a fish on each pair of pictures (205c). It pairs corresponding tail (i.e., body part) of the fish on the pair of pictures. It is apparent that there are several conventional pairing methods available that can be used, such as, block matching, with or without machine learning capabilities.

In the present invention, the fish detection module and the pairing module are not to be limited in terms of the execution order and the occurrence of these modules can be exchanged in the invention.

The tracking module (130, 230, 530) is configured to perform as a single fish tracking module, tracking the pair of fish in the series of pictures taken in time. The tracking module (130, 230, 530) is inputted with the output of the fish detection module (110, 210, 510) or the tail detection module (120, 220a) and tracks detected target detected by these modules. An objective of the tracking module (130, 230, 530) is to track fish in time in order to find out if a pair of fish photographed at time tn and a pair of fish photographed at time $t_{n+1}$ are identical fish. The tracking module (130, 230, 530) considers the fish as a target and represents the target by different ways such as, as part of a rectangle, as a filled contour, or as a point.

The tracking module (130, 230, 530) compares detected fishes on other frames using different ways such as:

a) Apply conventional fish tracking algorithm, for the instance as mentioned in the:

- DIDSON-based Acoustic Counting Method for Juvenile Ayu *Plecoglossus altivelis* Migrating Upstream by Jun HAN et. al.

- Particle Filter-Based Predictive Tracking for Robust Fish Counting by Erikson Morais et. al.

b) Apply classical image matching algorithm for e.g. template matching, point feature matching.

The distance calculation module (140, 240, 540) is configured to execute a calculation of a camera-body part distance between the camera (105, 205a & 205b, 505a & 505b) and the body part, preferably tail of the tracked identical fish on the plurality of pictures.

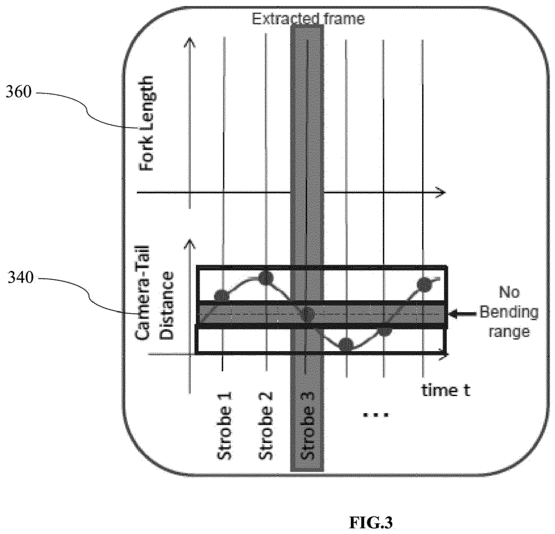

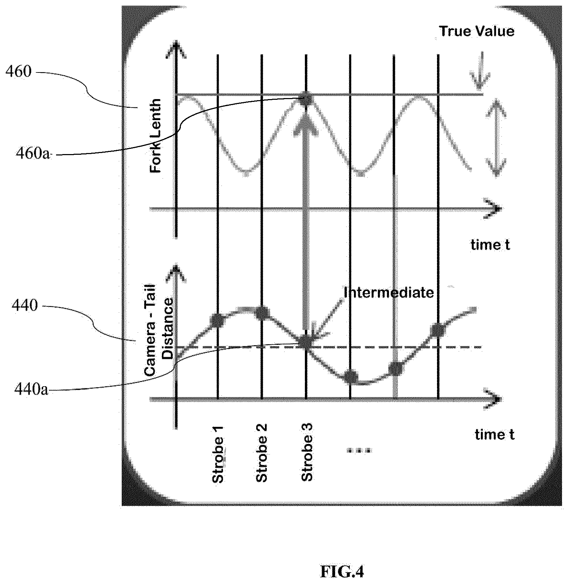

It is an objective of the invention to extract a strobe at a time *t* when the fish is not bending its body. The strobe is to be understood, by the ordinary skill in art, as the burst of light which enables capturing of the picture by the camera. Referring to Figs. 3 and 4, at step (340, 440), a graphical view is illustrated for camera-tail distance over time. Different strobes, for instance strobe-1, strobe-2, strobe-3, are depicted and distance between camera and tail is represented at different time '*t*' on the x-axis. It is an objective to measure camera-tail distance on each frame (each strobe shall be considered as a frame capturing a picture) by calculating a 3D position of the tail using the 2D position of the tail on the pair of pictures and triangulation technique and by then calculating the distance between the tail and the camera.

The picture selection module (150) is configured to extract a frame in which the camera-tail distance is at an intermediate distance (440a), between a max value of the distances and a min value of the distances. The extracted frame is considered as the frame in which the fish is not bending its body, i.e., the frame or the captured strobe in which true fork length (460a) at (460) in Fig. 4 is calculated.

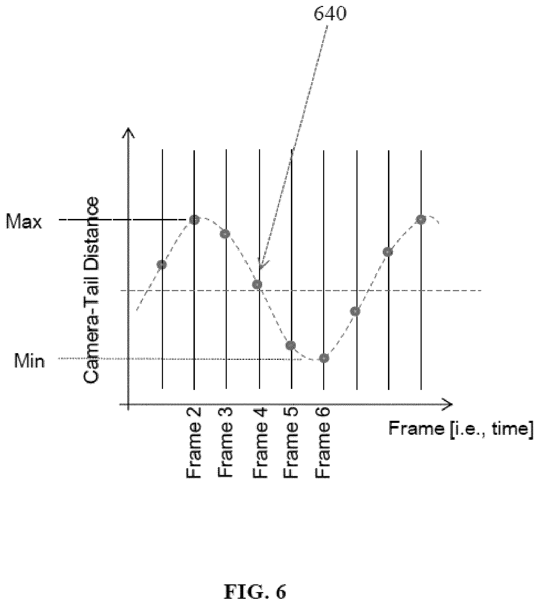

In an embodiment of the invention, as there could be several frames in which the camera-tail distance is at an intermediate distance between the max value of the distances and the min value of the distances, additional extraction process may be required. The picture selection module (150) performs the frame extraction process and is configured to select a picture, to be considered as intermediate picture of the tracked identical fish, from among the plurality of pictures on which the identical fish has been tracked based on the camera-body part distances of the tracked identical fish. Referring to Fig. 6, the present invention discloses without limitation, frames that can be considered before extraction such as:

a) All frames between a frame of maximum (minimum) distance and the next frame of minimum (maximum) distance;

b) All frames between a frame of minimum (maximum) distance and the next frame of minimum (maximum) distance; or

c) All frames of a tracked fish

Once possible frames have been considered, the invention discloses, without limitation, 3 possible processes to extract the frame such as:

i) Extract a frame at median of distances;

ii) Extract a frame whose distance is nearest to mean of distances; or

iii) Extract a frame whose time is nearest to mean of times.

As an example to illustrate the 3 possible processes i) ii) iii) mentioned above, let's consider that n possible frames are candidates after performing one of the steps a), b) and c) mentioned above. According to process i), a median of the n camera-tail distances of the n frames is calculated and the frame corresponding to the calculated median is the extracted frame. According to process ii), a mean of the n camera-tail distances of the n frames is calculated and the frame whose camera-tail distance is nearest to the calculated mean is the extracted frame. According to process iii), a mean of the n times of the n frames is calculated and the frame whose time is nearest to the calculated mean is the extracted frame.

In the preferred embodiment, the Fig. 6 is the graphical representation of the result after considering the frames according to step (a) above (i.e., 3 frames (frames 3 to 5) between a frame of maximum camera-tail distance (frame 2) and the next frame of minimum camera-tail distance (frame 6)) and performing the frame extraction process according to step (i) above. The (640) represents the frame with median value of camera-tail distance among the 3 frames.

After the selection of appropriate frame based on the camera-body part distances of the tracked identical fish, the size calculation is performed.

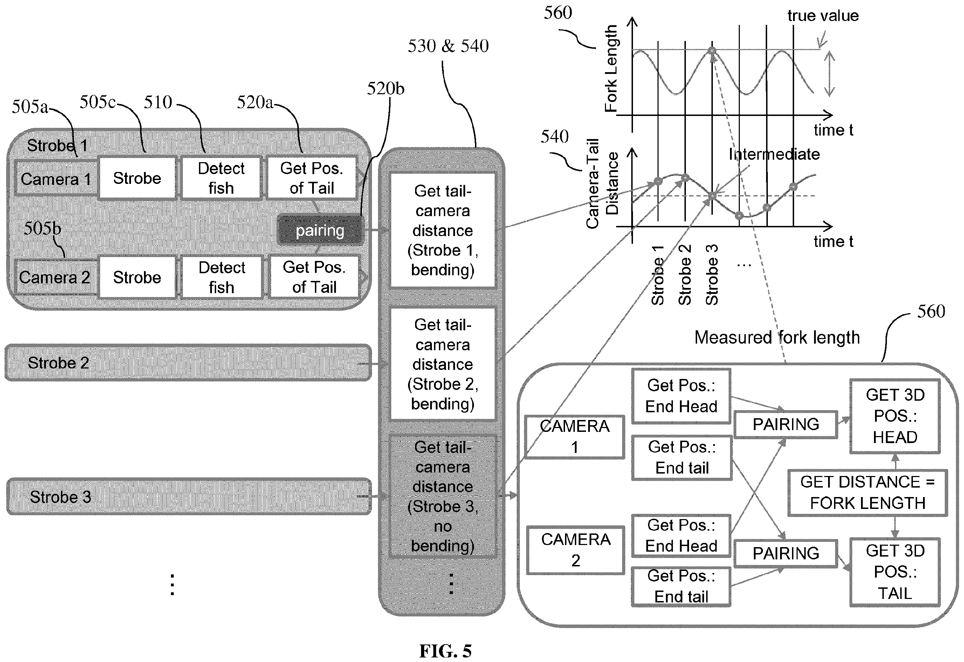

The size calculation module (160) is configured to perform calculation of size of the tracked identical fish from the selected picture. Referring to Fig. 5 at step (560) the fork length is calculated. The size calculation module (160) performs a 3D reconstruction and length measuring activity. The fork length is calculated from the fish on the extracted frame by for instance:

    a) Detecting two body parts on the fish, for example, head and tail;

    b) Performing a 3D reconstruction of a 2D position of the two body parts by triangulation technique; and

    c) Calculating a distance between the two body parts.

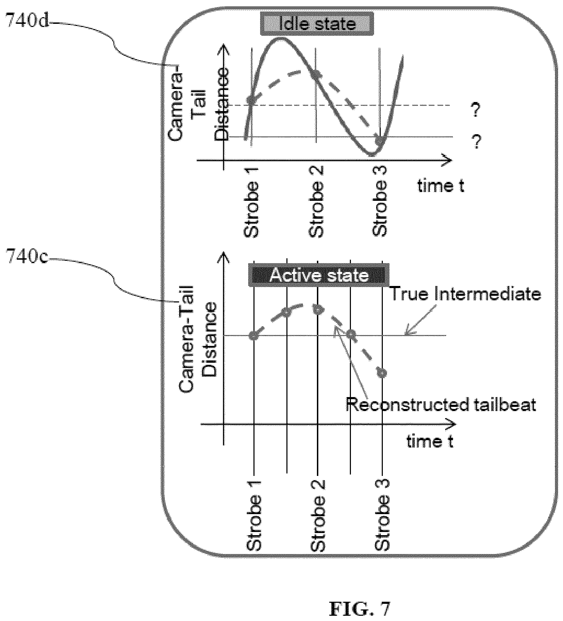

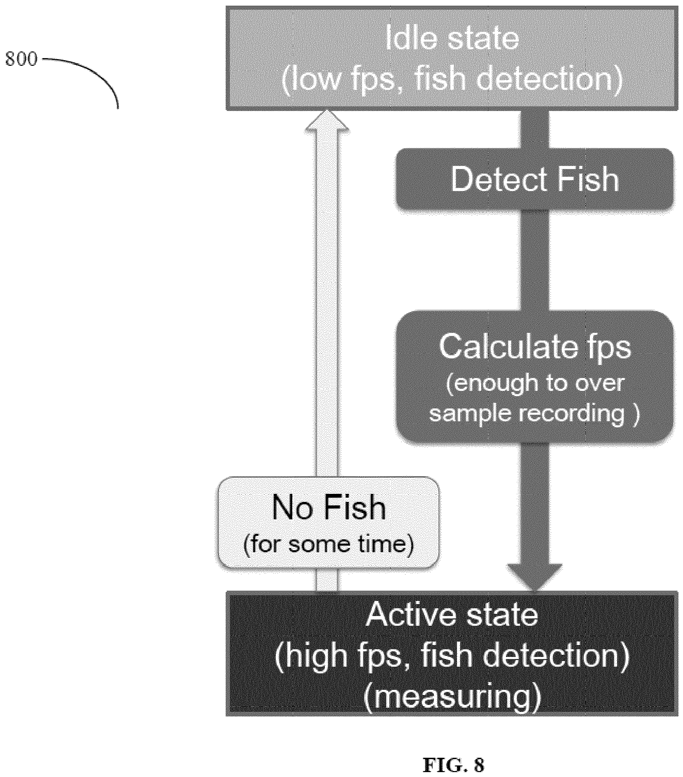

In another embodiment of the present invention, a frame rate control process is disclosed. Referring to Fig. 7 and Fig. 8; the present invention is capable of detecting the presence of the fish. When the fish is detected the camera goes to active state (740c) and the camera-tail distance is measured in relation to time. Whereas, if the fish is not detected for a given time interval the camera goes into an idle state (740d). In this embodiment, a strobe speed control module (800) is configured to perform the task of controlling a time lag between the plurality of pictures taken by the camera system.

The strobe speed control module (800) reduces the time lag when the fish detection module detects fish and increases the time lag when the fish is not detected by the fish detection module.

In a preferred embodiment, when the fish detection module detects fish, the strobe speed control module (800) is configured to perform the task of calculating a frequency component from the camera-body part distances, and control the time lag based on the frequency component. In another preferred embodiment, the strobe speed control module performs the task of controlling the time lag so that a sampling frequency corresponding to the time lag is at least set to twice the frequency component.

In an embodiment of the present invention is provided a process to calculate the frame rate for active state from tail beat frequency. The tail beat frequency can be estimated from various ways:

    a) Estimation from swim speed and fish species;

    b) Estimation from under sampled values of camera-tail distance.

In a preferred embodiment, the tail beat frequency is used to determine the frame rate in "Active State" thus adjusting the oversampling process accordingly. With the calculated tail beat frequency, the frame rate is adjusted to finally align with the requirements of the sampling theorem.

In another embodiment of the invention, with reference to Fig. 10, the device for calculating fish size includes the stereo camera (105, 205a & 205b, 505a & 505b), the fish detection module (110, 210, 510), the body part detection module (120, 220a, 520a), the tracking module (130, 230, 530), a body part position calculation module (1040), a picture selection module (1050) and the size calculation module (160, 560). Compared to the above embodiments and Fig. 1, the distance calculation module (140, 240, 540) is replaced by the body part position calculation module (1040), the picture selection module (150) is replaced by the picture selection module (1050), and the other modules remain identical.

The body part position calculation module (1040) is configured to calculate a position of the body part, preferably the tail, for the tracked identical fish on the plurality of pictures. The position of the body part is calculated by triangulation technique using the 2D position of the body part on the pair of pictures.

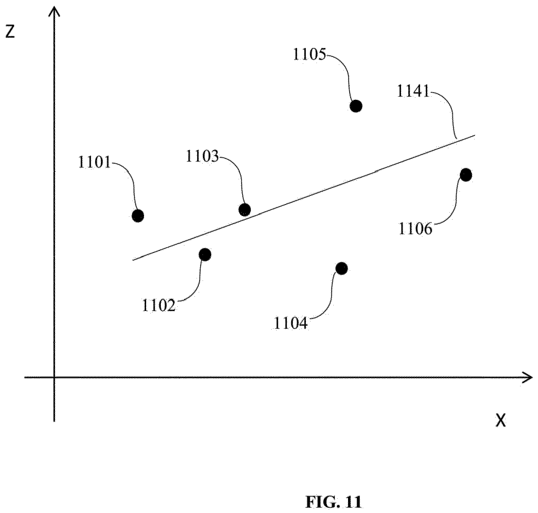

Fig. 11 illustrates an example in which the positions (1101, 1102, 1103, 1104, 1105, 1106) of the tail of a tracked identical fish calculated from the plurality of pictures on which the fish has been tracked over time are plotted. In this example, position 1106 is the most recent position of the fish whereas position 1101 is the oldest position of the fish. In Fig. 11, the positions are projected on a 2D horizontal plane X-Z, in which the Z axis is parallel to a lens of the stereo camera.

The body part position calculation module (1040) is further configured to calculate a line (1141) that best fits the positions (1101, 1102, 1103, 1104, 1105, 1106) of the tail of the tracked identical fish on the plurality of pictures. For example, without limitation, the line (1141) may be calculated by regression analysis, with for example the least squares method. The line (1141) may be a 3D line calculated in 3D from the 3D positions of the tail. The line (1141) may also be a 2D line calculated in 2D after projecting the 3D positions of the tail on the 2D horizontal plane X-Z. The line (1141) is representative of a trajectory of the tracked identical fish.

The picture selection module (1050) is configured to extract a frame (picture) in which the fish is not bending its body, based on a relative position of the tail and the line (1141). More specifically, as an example, the picture selection module (1050) may select a frame in which the position of the tail is close to the line (1141), i.e., less than a given distance from the line (1141), therefore close to the trajectory of the tracked identical fish. Preferably, the picture selection module (1050) may select a frame in which the position of the tail is closest to the line (1141), e.g., position (1103) in Fig. 11.

In this embodiment, the body part is preferably the tail or a part of the tail. However, without any limitation, the body part may be another part of the fish. Preferably, the body part may be closer to the tail than the mouth of the fish.

The fish size calculating device of this embodiment may include the strobe speed control module (800) of the previous embodiments that controls the time lag between the plurality of pictures taken by the camera system. The time lag is reduced when the fish detection module detects fish and increased when the fish detection module does not detect fish.

A technical effect of the embodiments of the invention will now be described. Conventionally, fish size calculation was performed with camera capturing the pictures of fish at different time and calculating the fork length. However, the tail-beat and the deviation error were not considered to calculate the fork length. As a result, when the fork length was calculated it resulted in a value lesser than the true value thus having an error over accepted rate of 2%.

In order to solve this problem, in embodiments of the present disclosure, the frame in which the fish is not bending its body is extracted. When performing fork length measurement, the present invention discloses a technique to measure camera and body-part distance on each frame and extract a frame in which the camera-body part distance is at an intermediate distance, between a max value of the distances and a min value of the distances. When performing fork length measurement, the present invention also discloses a technique to measure body part position on each frame and extract a frame in which the body part position is close to a trajectory of the fish.

As a result, a more accurate fork length and thus fish size can be calculated.

**Claims**

1. A fish size calculating device, comprising:

   a camera system (105) configured to take a plurality of pictures (205c) in time;
   a fish detection module (110, 210) configured to detect a fish on the plurality of pictures;

   a body part detection module (120, 220a) configured to detect a body part of the detected fish on the plurality of pictures;
   a tracking module (130, 230) configured to track an identical fish among the detected fish on the plurality of pictures; and
   a size calculation module (160) configured to calculate a size of the tracked identical fish.

2. The fish size calculating device of claim 1, further comprising:

   a distance calculation module (140, 240) configured to calculate a camera-body part distance between the camera system and the body part of the tracked identical fish on the plurality of pictures; and
   a picture selection module (150) configured to select a picture of the tracked identical fish from among the plurality of pictures on which the identical fish has been tracked based on the camera-body part distances of the tracked identical fish; wherein
   the size calculation module (160) is configured to calculate the size of the tracked identical fish from the selected picture.

3. The fish size calculating device of claim 2, wherein: the picture selection module (150) is configured to:

   search for an intermediate picture, from among the plurality of pictures on which the identical fish has been tracked, on which the camera-body part distance (440) is at an intermediate distance (440a), the intermediate distance (440a) being smaller than on another picture where the camera-body part distance (440) is a maximum, and the intermediate distance (440a) being bigger than on another picture where the camera-body part distance is a minimum, and set the intermediate picture as the selected picture.

4. The fish size calculating device of claim 3, wherein: when the picture selection module (150) has found a plurality of intermediate pictures, the picture selection module is configured to select a picture, from among the plurality of intermediate pictures, in which the camera-body part distance is at a median distance (640), as the selected picture.

5. The fish size calculating device of claim 3, wherein: when the picture selection module (150) has found a plurality of intermediate pictures, the picture selection module is configured to select a picture, from among the plurality of intermediate pictures, in which the camera-body part distance is nearest to mean of distances, as the selected picture.

**6.** The fish size calculating device of claim 3, wherein: when the picture selection module (150) has found a plurality of intermediate pictures, the picture selection module is configured to select a picture, from among the plurality of intermediate pictures, whose time is nearest to mean of times, as the selected picture.

**7.** The fish size calculating device of any of the preceding claims, wherein: the body part detection module (120, 210a) is configured to detect, as the body part, a part closer to a tail of the fish than a mouth of the fish.

**8.** The fish size calculating device of any of the preceding claims, wherein: the body part detection module (120, 210a) is configured to detect, as the body part, a part on a tail of the fish.

**9.** The fish size calculating device of any of the preceding claims, further comprising: a strobe speed control module (800) configured to control a time lag between the plurality of pictures taken by the camera system, the time lag being reduced when the fish detection module detects fish and increased when the fish detection module does not detect fish.

**10.** The fish size calculating device of claim 9, wherein: when the fish detection module (110) detects fish, the strobe speed control module is configured to:

calculate a frequency component from the camera-body part distances, and control the time lag based on the frequency component.

**11.** The fish size calculating device of claim 10, wherein: the strobe speed control module is configured to control the time lag so that a sampling frequency corresponding to the time lag is at least set to twice the frequency component.

**12.** The fish size calculating device of claim 1, further comprising:

a body part position calculation module (1040) configured to calculate a position (1101, 1102, 1103, 1104, 1105, 1106) of the body part of the tracked identical fish on the plurality of pictures and calculate a line (1141) that best fits the positions (1101, 1102, 1103, 1104, 1105, 1106) of the body part of the tracked identical fish; and a picture selection module (1050) configured to select a picture of the tracked identical fish from among the plurality of pictures on which the identical fish has been tracked, based on a relative position of the body part and the line (1141); wherein the size calculation module (160) is configured to calculate the size of the tracked identical fish from the selected picture.

**13.** The fish size calculating device of claim 12, wherein: the picture selection module (1050) is configured to select a picture of the tracked identical fish from among the plurality of pictures on which the position of the body part is less than a given distance from the line.

**14.** The fish size calculating device of claim 12 or claim 13, wherein: the picture selection module (1050) is configured to select a picture of the tracked identical fish from among the plurality of pictures on which the position of the body part is closest to the line.

**15.** A fish size calculating method comprising:

capturing a plurality of pictures (205c) in time; detecting (110,210) a fish on the plurality of pictures; detecting (120,220a) a body part of the detected fish on the plurality of pictures; tracking (130,230) an identical fish among the detected fish on the plurality of pictures; and calculating (160) a size of the tracked identical fish.

105

Camera System

110

Fish detection module

120

Body part detect. module

130

Tracking module

140

Distance Calc. module

150

Picture selection module

160

Size calc. module

**FIG. 1**

**FIG. 2**

205a

205c

210 & 220a

220b

230

240

Camera 1

Camera 2

205b

Camera-tail distance
(Strobe 1, bending)

Camera-tail distance
(Strobe 2, bending)

Camera-tail distance
(Strobe 3, no bending)

EP 3 954 206 A1

**FIG.3**

**FIG.4**

FIG. 5

FIG. 6

**FIG. 7**

800

Idle state
(low fps, fish detection)

Detect Fish

Calculate fps
(enough to over
sample recording )

No Fish
(for some time)

Active state
(high fps, fish detection)
(measuring)

FIG. 8

**FIG.9a**

**FIG.9b**

**FIG. 10**

**FIG. 11**

Europäisches
Patentamt

European
Patent Office

Office européen
des brevets

# EUROPEAN SEARCH REPORT

**Application Number**

EP 20 19 0637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 539 495 A (ACE AQUATEC LTD [GB]) 21 December 2016 (2016-12-21) | 1,7-11, 15 | INV. A01K61/95 |
| A | * the whole document * | 2-6, 12-14 | |
| X | US 10 534 967 B2 (X DEV LLC [US]) 14 January 2020 (2020-01-14) | 1,2, 7-11,15 | |
| A | * the whole document * | 3-6, 12-14 | |
| X | WO 2019/188506 A1 (NEC CORP [JP]) 3 October 2019 (2019-10-03) * the whole document * | 1,7-11 | |

**TECHNICAL FIELDS SEARCHED (IPC)**

A01K

The present search report has been drawn up for all claims

| Place of search | Date of completion of the search | Examiner |
|---|---|---|
| The Hague | 26 January 2021 | Batres Arnal, Lucía |

**ANNEX TO THE EUROPEAN SEARCH REPORT
ON EUROPEAN PATENT APPLICATION NO.**

EP 20 19 0637

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2021

| Patent document cited in search report | | Publication date | Patent family member(s) | | Publication date |
|---|---|---|---|---|---|
| GB 2539495 | A | 21-12-2016 | NONE | | |
| US 10534967 | B2 | 14-01-2020 | CA | 3087370 A1 | 07-11-2019 |
| | | | CL | 2020001744 A1 | 28-12-2020 |
| | | | EP | 3707728 A1 | 16-09-2020 |
| | | | US | 2019340440 A1 | 07-11-2019 |
| | | | US | 2020104602 A1 | 02-04-2020 |
| | | | WO | 2019212807 A1 | 07-11-2019 |
| WO 2019188506 | A1 | 03-10-2019 | NONE | | |

EPO FORM P0459

For more details about this annex : see Official Journal of the European Patent Office, No. 12/82